(19) Europäisches Patentamt
European Patent Office
Office européen des brevets

(11) Veröffentlichungsnummer: **0 185 853**
**B1**

(12) # EUROPÄISCHE PATENTSCHRIFT

(45) Veröffentlichungstag der Patentschrift: **11.04.90**

(51) Int. Cl.$^5$: **C 09 D 201/02,** C 08 L 77/00

(21) Anmeldenummer: **85111579.0**

(22) Anmeldetag: **13.09.85**

(54) **Verwendung von pulverförmigen Beschichtungsmitteln auf der Basis von Polyamiden mit durchschnittlich mindestens neun Kohlenstoffatomen pro Carbonamidgruppe.**

(30) Priorität: **15.11.84 DE 3441708**

(43) Veröffentlichungstag der Anmeldung:
**02.07.86 Patentblatt 86/27**

(45) Bekanntmachung des Hinweises auf die Patenterteilung:
**11.04.90 Patentblatt 90/15**

(84) Benannte Vertragsstaaten:
**AT BE CH DE FR GB IT LI NL SE**

(56) Entgegenhaltungen:
**EP-A-0 014 772**
**EP-A-0 020 863**

**CHEMICAL ABSTRACTS, Band 78, 7. Mai 1973, Seite 64, Zusammenfassung Nr. 112627b, Columbus, Ohio, US; & JP-A-72 34 798 (TEIJIN LTD) 22-11-1972**

**CHEMICAL ABSTRACTS, Band 80, Nr. 14, 8. April 1974, Seite 66, Zusammenfassung Nr. 71976k, Columbus, Ohio, US; & JP-A-73 06 412 (TEIJIN LTD) 26-02-1973**

(73) Patentinhaber: **HÜLS AKTIENGESELLSCHAFT**
**Patentabteilung / PB 15 - Postfach 13 20**
**D-4370 Marl 1 (DE)**

(72) Erfinder: **Feldmann, Rainer, Dr.**
**Leverkusener Strasse 27**
**D-4370 Marl (DE)**
Erfinder: **Hess, Günter**
**Rotdornweg 6**
**D-4358 Haltern (DE)**

**EP 0 185 853 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

## Beschreibung

Gegenstand der Erfindung sind verbesserte Überzugsmittel auf der Basis von Polyamiden mit durchschnittlich mindestens neun Kohlenstoffatomen pro Carbonamidgruppe zur Verwendung nach dem Schmelzüberzugsverfahren.

Es ist bekannt; daß man Polyamidpulver, auch solche auf der Basis von Polyamiden mit mindestens elf Kohlenstoffatomen, verwenden kann zur Herstellung lackähnlicher Überzüge auf Metallen (Chem. Ind. 1968, Seite 783 ff, Modern Plastics, Februar 1966, Seite 153 bis 156).

Die Beschichtung erfolgt nach dem Schmelzüberzugsverfahren, d.h. nach dem Wirbelsinterverfahren, dem Flammspritzverfahren oder nach dem elektrostatischen Beschichtungsverfahren. Die Polyamidpulver werden erhalten durch Fällen des Polyamids aus Lösungen (ausgelegte Unterlagen der deutschen Patentanmeldung S 2805 39b—22/04, ausgelegt am 10.05.51, oder äquivalente FR—A—989 062, EP—B1—14 772 bzw. DE—B—29 06 647) oder durch Mahlen des Polyamidgranulates (DE—B—25 45 267).

Es sind bereits verschiedene Maßnahmen zur Verbesserung der Eigenschaften von Überzugsmitteln auf der Basis von Polyamiden bekannt (DE—16 69 821, 12 71 286, 22 22 123, 28 55 920, 21 44 606).

Die bekanntgewordenen Beschichtungspulver bedürfen jedoch noch einer Verbesserung. Bei Kanten mit sehr kleinem Krümmungsradius, d.h. bei dünnen Drähten und insbesondere bei Formkörpern, die aus solchen Drähten hergestellt sind, wie z.B. Körben, treten dabei, insbesondere an den Kreuzungsstellen der gebildeten Gitter, ungleichmäßige Eigenschaften auf, je nach Ort und Beanspruchung der Beschichtung.

So gelangt man an den Kreuzungsstellen der Gitter zwar zu relativ porenfreien Beschichtungen mit Polyamidpulvern geringeren Molekulargewichts (kleiner Wert für die relative spez. Viskosität), jedoch sind die Kanten der Drahtenden nicht ausreichend beschichtet. Die Verwendung höhermolekularer Pulver bringt hier keine Abhilfe, da die Porenbildung wesentlich zunimmt und die notwendige Elastizität nicht ausreichend erhalten bleibt.

Aufgabe der Erfindung ist es daher, Beschichtungspulver bereitzustellen, welche bei ihrer Verwendung als Beschichtungsmittel nach dem Schmelzüberzugsverfahren die bisher bekannt guten Eigenschaften beibehalten und außerdem Überzüge hervorragender Glätte liefern, die demnach porenfrei sind und außerdem an scharfen Kanten ausreichende Beschichtung mit hoher Elastizität ergeben.

Die Lösung der Aufgabe gelingt durch Verwendung der Beschichtungsmittel gemäß den Ansprüchen.

Unter Polyamiden mit durchschnittlich mindestens neun aliphatisch gebundenen Kohlenstoffatomen werden verstanden: Homopolyamide, wie Polylaurinlactam (11 C-Atome), Polyundecansäureamid (10 C-Atome).

Ferner Mischpolyamide, wie Polyamide aus 80% Laurinlactam und 20% Caprolactam, aus 90% Laurinlactam und 10% Salz aus Hexamethylendiamin mit Adipinsäure, aus 95% Laurinlactam und 5% Salz aus Isophorondiamin und Dodecandisäure, aus 90% Laurinlactam und 10% Aminoundecansäure, aus 90% Aminoundecansäure und 10% Caprolactam.

Bevorzugt können Mischungen von Homopolyamiden oder von Homopolyamiden mit Mischpolyamiden verwendet werden, soweit die Mischungen pro Carbonamidgruppe durchschnittlich mindestens 9 aliphatisch gebundene Kohlenstoffatome besitzen.

Bevorzugte aliphatische Gruppen sind lineare $CH_2$-Gruppen, jedoch können auch verzweigtkettige aliphatische Gruppen vorhanden sein.

Der Anteil der Homo- und Mischpolyamide in der Mischung kann von 10:90 bis zu 90:10 Gewichtsprozent betragen. Bevorzugt werden Gemische eingesetzt, deren Anteile von 60:40 bis 40:60 Gewichtsprozent betragen.

Besonders bevorzugt werden Homopolyamide, insbesondere Polylaurinlactam oder Polyundecansäureamid, verwendet.

Der eine Bestandteil A der Gemische gemäß der Erfindung besitzt einen niedrigen Wert für die Lösungsviskosität nämlich einen Wert von $\eta_{rel}$ 1,50 bis 1,65 (gemessen in m-Kresol bei 25°C bei einer Konzentration von 0,5 g/l, DIN 53 727). Dieser Bestandteil A kann aus einer einzigen Komponente oder einem Gemisch bestehen, gemäß der vorher gegebenen Definition der Polyamide.

Dieser Anteil A ist im Gesamtgemisch aus A + B zu 20 bis 80, vorzugsweise zu 25 bis 75, insbesondere zu 33 bis 67 Gewichtsprozent, enthalten.

Der Bestandteil B ist ein gleichartiges Polyamid mit durchschnittlich mindestens 9 aliphatisch gebundenen Kohlenstoffatomen pro Carbonamidgruppe, wie der Bestandteil A, also ein Homopolyamid oder ein Gemisch aus Homopolyamiden oder Homo- und Copolyamiden. Es unterscheidet sich durch den Wert der höheren Viskosität; dieser beträgt $\eta_{rel}$ 1,55 bis 1,75.

Der Anteil dieses Bestandteiles B im Gesamtgemisch liegt entsprechend, demnach bei 80 bis 20, vorzugsweise bei 75 bis 25, insbesondere bei 67 bis 33 Gewichtsprozent.

Der Unterschied in den Werten für die relative Viskosität beträgt mindestens 0,04 und höchstens 0,1 Einheiten.

Wesentlich ist außerdem, daß nach dem Fällungsverfahren hergestellte Pulver nur als Pulver gemischt werden können. Es ist bei derartigen Komponenten also nicht möglich, die Granulate zu mischen und diese Mischung anschließend gemeinsam zu fällen.

Dagegen ist es möglich, Mischungen aus Granulaten dem Kaltmahlverfahren zu unterwerfen oder auch nach dem Kaltmahlverfahren erhaltene Pulver nachträglich zu mischen.

Das Mischen kann in üblichen Mischern erfolgen, z.B. in Fluidisierbehältern oder Schnellmischern. Das Mischen der Pulverbestandteile kann vor dem endgültigen Klassieren erfolgen, also vor dem Sieben oder Windsichten. Es können aber auch die bereits klassierten Pulver gemischt werden.

Die Mischungen können die üblichen Zusatzstoffe, wie Stabilisatoren, Pigmente, Farbstoffe oder Antistatika enthalten.

Die Erfindung soll durch folgende Beispiele näher erläutert werden.

Zur Beschichtung wurden Metallgitter eingesetzt, die aus Drähten mit Durchmessern zwischen 0,8 und 3,5 mm zusammengeschweißt waren. Bewertet wurde der Verlauf hinsichtlich der Anzahl gebildeter Poren an den Kreuzgitterstellen, die Kantenabdeckung (Bewertung 1 = sehr dicke Abdeckung bis 5 = Kante fast unbeschichtet) sowie die Elastizität der Beschichtung durch Verbiegung eines Drahtendes bis zum Reißen der Beschichtung an der Schweißstelle (Bewertung 1 = kein Reißen bei der Verbiegung um 135°, 2 um 90°, 3 um 45°, 4 um 15°, 5 um weniger als 15°).

Die Beispiele und die mit V gekennzeichneten Vergleichsbeispiele verdeutlichen die Erfindung.

Das Vergleichsbeispiel 4 zeigt, daß eine Mischung der Ausgangsgranulate vor dem Fällprozeß keine Verbesserung bewirkt. In Vergleichsbeispiel 5 wird gezeigt, daß die untere Grenze des Pulvers bei $\eta_{rel}$ 1,50 liegen muß, in Vergleichsbeispiel 12, daß die oberen Grenzen nicht über $\eta_{rel}$ 1,65 bzw. 1,75 gehen dürfen. Vergleichsbeispiel 6 sagt aus, daß die Differenz der $\eta_{rel}$-Einheiten nicht unter 0,04 und Vergleichsbeispiel 9 nicht über 0,1 betragen dürfen. In den Vergleichsbeispielen 7 und 8 wird gezeigt, daß die kritischen Grenzen bei der Mischung zwischen 20:80 bis 80:20 liegen müssen.

| Beispiel | $\eta_{rel}$ Pulver I | $\eta_{rel}$ Pulver II | Mischung | Mischungsverhältnis I : II Gew.-% | Art des Mischens * | Drahtdurchmesser der Gitter in mm | Poren | Kante | Elastizität |
|---|---|---|---|---|---|---|---|---|---|
| 1 | 1,52 | 1,58 | 1,55 | 50 : 50 | B | 1 | 0 | 2 | 2 |
| 2** | 1,52 | 1,58 | 1,55 | 50 : 50 | B | 1 | 0 | 2 | 2 |
| 3 | 1,52 | 1,58 | 1,57 | 20 : 80 | B | 1 | 0 | 2 | 2 |
| 4 | 1,52 | 1,58 | 1,53 | 80 : 20 | B | 1 | 0 | 2 - 3 | 2 - 3 |
| 5 | 1,58 | 1,65 | 1,62 | 50 : 50 | B | 3,5 | 0 | 1 | 1 |
| 6 | 1,65 | 1,75 | 1,70 | 50 : 50 | B | 4,5 | 0 | 1 | 1 |
| 7 | 1,50 | 1,55 | 1,53 | 50 : 50 | C | 1,5 | 0 | 2 | 2 |
| 8 | 1,50 | 1,55 | 1,53 | 50 : 50 | D | 1,5 | 0 | 2 | 2 |
| 9*** | 1,58 | 1,65 | 1,62 | 50 : 50 | B | 3,5 | 0 | 1 | 1 |
| 10**** | 1,58 | 1,65 | 1,62 | 50 : 50 | B | 3,5 | 0 | 1 | 1 |

Erläuterungen siehe Seite 8

| Vergleichsbeispiel | $\eta$ rel Pulver I | $\eta$ rel Pulver II | Mischung | Mischungsverhältnis I : II Gew.-% | Art des Mischens | Drahtdurchmesser der Gitter in mm | Poren | Kante | Elastizität |
|---|---|---|---|---|---|---|---|---|---|
| 1 | 1,52 | - | - | - | - | 1 | 0 | 5 | 5 |
| 2 | 1,58 | - | - | - | - | 1 | 5 | 2 | 2 |
| 3 | 1,55 | - | - | - | - | 1 | 2 | 3 | 4 |
| 4 | 1,52 | 1,58 | 1,55 | 50 : 50 | A | 1 | 2 | 3 | 4 |
| 5 | 1,45 | 1,55 | 1,50 | 50 : 50 | B | 1 | 0 | 5 | 5 |
| 6 | 1,52 | 1,54 | 1,53 | 50 : 50 | B | 1 | 0 | 3 | 3 |
| 7 | 1,52 | 1,58 | 1,57 | 10 : 90 | B | 1 | 2 | 2 | 2 |
| 8 | 1,52 | 1,58 | 1,53 | 90 : 10 | B | 1 | 0 | 4 | 3 - 4 |
| 9 | 1,58 | 1,70 | 1,64 | 50 : 50 | B | 3,5 | 8 | 1 | 2 |
| 10 | 1,58 | - | - | - | - | 3,5 | 0 | 4 | 3 - 4 |
| 11 | 1,65 | - | - | - | - | 3,5 | 6 | 1 | 2 |
| 12 | 1,70 | 1,80 | 1,75 | 50 : 50 | B | 4,5 | 20 | 1 | 1 |
| 13***** | 1,58 | 1,65 | 1,62 | 50 : 50 | B | 3,5 | 2 | 1 | 5 |

Erläuterungen siehe Seite 8

Erläuterungen zu den Tabellen:

* A Mischen der Ausgangsgranulate und Fällen des gelösten Gemisches
B Mischen der gefällten Pulver
C Mischen der gemahlenen Pulver
D Mischen der Ausgangsgranulate vor dem Vermahlen

** Polyamid-11

*** Polyamidpulver, hergestellt aus einer Mischung von Polylaurinlactam mit einem Copolyamid aus 80% Laurinlactam und 20% Caprolactam im Verhältnis 50:50

**** Polyamidpulver, hergestellt aus einer Mischung von Polylaurinlactam mit einem Copolyamid aus 95% Laurinlactam und 5% Isophorondiamin-Dodecandisäuresalz im Verhältnis 50:50

***** Gemisch aus ungleichartigen Polyamiden, nämlich aus einem Gemisch gemäß Beispiel 9 und einem Gemisch gemäß Beispiel 10

**Patentansprüche**

1. Verwendung von Beschichtungspulvern auf der Basis von Polyamiden als verbessertes Beschichtungsmittel nach dem Schmelzüberzugsverfahren, bestehend neben üblichen Zusatzstoffen aus einer Mischung von

A 80 bis 20 Gewichtsprozent eines Polyamids mit durchschnittlich mindestens neun aliphatisch gebundenen Kohlenstoffatomen pro Carbonamidgruppe mit einer relativen Viskosität von 1,50 bis 1,65 (gemessen nach DIN 53 727) und entsprechend

B 20 bis 80 Gewichtsprozent eines gleichartigen Polyamids mit einer relativen Viskosität von 1,55 bis 1,75, wobei die Differenz in dem Wert der relativen Viskosität des Bestandteils A und des Bestandteils B mindestens 0,04 und höchstens 0,1 Einheiten beträgt, wobei die Mischung erhalten worden ist durch Mischen entsprechender Pulver, die sowohl nach Fällungs- oder Mahlverfahren hergestellt worden sind, mit der Maßgabe, daß auch Mischungen entsprechender Granulate anschließend dem Mahlverfahren unterworfen werden können.

2. Verwendung von Beschichtungspulver nach Anspruch 1, dadurch gekennzeichnet, daß die Bestandteile A und B ein aliphatisches Homopolyamid des Grundbausteins

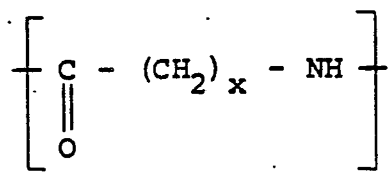

darstellen, worin x den Wert 9 bis 12 bedeutet.

**Revendications**

1. L'utilisation de poudres d'enduction à base de polyamides comme agent d'enduction amélioré selon le procédé de revêtement en fusion, constitué, en plus des additifs usuels, d'un mélange de

A de 80 à 20% en poids d'une polyamide comportant en moyenne au moins neuf atomes de carbone aliphatiquement liés par groupe carboxylamide, possédant une viscosité relative (mesurée selon DIN 53 727) de 1,50 à 1,65 et conformément à cela,

B de 20 à 80% en poids d'une polyamide du même type possédant une viscosité relative de 1,55 à 1,75, la différence dans la valeur de la viscosité relative du composant A et celle du composant B s'élevant au moins à 0,04 et au plus à 0,1 unité, le mélange ayant été obtenu par brassage des poudres correspondantes qui ont été préparées aussi bien selon des procédés de précipitation que, selon des procédés de broyage, sous réserve que des mélanges de granulats correspondants puissent aussi être ensuite soumis au procédé de broyage.

2. L'utilisation de poudres d'enduction selon la revendication 1, caractérisée par le fait que les composants A et B représentent une homopolyamide aliphatique de l'élément de base

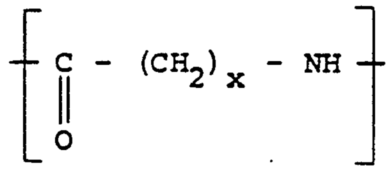

*x* ayant une valeur de 9 à 12.

**Claims**

1. The use as improved coating agents in accordance with the melt-coating process of coating powders based on polyamides, composed of, besides customary additives, a mixture of

A 80 to 20 per cent by weight of a polyamide having an average of at least nine aliphatically bound carbon atoms per carboxamide group and having a relative viscosity of 1.50 to 1.65 (measured in accordance with DIN 53727) and correspondingly

B 20 to 80 per cent by weight of a polyamide of the same type having a relative viscosity of from 1.55 to 1.75, the difference in the value of the relative viscosity between component A and component B being at least 0.04 and at most 0.1 unit, the mixture having been obtained by mixing corresponding powders which had been prepared either by a precipitation process or by a grinding process, with the proviso that it is also possible subsequently to subject mixtures of corresponding granules to the grinding process.

2. The use of coating powders according to claim 1, characterised in that components A and B are an aliphatic homopolyamide having the basic unit

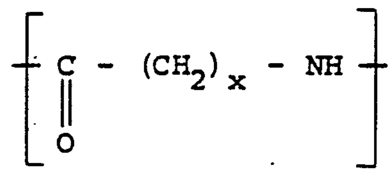

in which x denotes the value 9 to 12.